# FASCICULE DE BREVET EUROPEEN

(11) **EP 0 531 210 B1**
(45) Date de publication et mention de la délivrance du brevet: **04.03.1998**
(21) Numéro de dépôt: 92402401.1
(22) Date de dépôt: 03.09.1992
(51) Int. Cl.: H04B 10/18

(54) **Liaison de communication optique avec correction d'effets non linéaires et procédé de traitement d'un signal optique**
Optische Übertragungsverbindung mit Korrektur von Nichtlineareffekten und Verfahren zur Verarbeitung eines optischen Signals
Optical communication link with non-linear effects correction and optical signal processing method

(30) Priorité: 06.09.1991 FR 9111077
(43) Date de publication de la demande: 10.03.1993
(73) Titulaire: ALCATEL ALSTHOM COMPAGNIE GENERALE D'ELECTRICITE, 75008 Paris (FR)
(72) Inventeur: Prigent, Laurence, F-91180 Saint Germain les Arpajon (FR); Audouin, Olivier, F-91600 Savigny sur Orge (FR); Hamaide, Jean-Pierre, F-91180 Saint Germain les Arpajon (FR); Chesnoy, José, F-75014 Paris (FR)
(74) Mandataire: Bourely, Paul

(56) Documents cités:
- US-A- 4 969 710
- PATENT ABSTRACTS OF JAPAN vol. 11, no. 257 (E-534)(2704) 20 Août 1987 & JP-A-62 065 530
- JOURNAL OF LIGHTWAVE TECHNOLOGY. vol. 8, no. 3, Mars 1990, NEW YORK US pages 367 - 375 K.IWASHITA ET AL 'Chromatic Dispersion Compensation in Coherent
- Optical Communications'
- IEEE JOURNAL OF QUANTUM ELECTRONICS. vol. 25, no. 9, Septembre 1989, NEW YORK US pages 1981 - 1984 A.FRENKEL ET AL 'Compensation of dispersion in Optical Fibers for the 1.3-1.6 micrometer Region with a Grating and Telescope'
- IEEE PHOTONICS TECHNOLOGY LETTERS vol. 2, no. 8, Août 1990, NEW YORK, US pages 585 - 587 A.H.GNAUCK ET AL 'Optical Equalization of Fiber Chromatic Dispersion in a 5-Gb/s Transmission System'

## Description

La présente invention concerne la réalisation d'une liaison de communication optique lorsque des effets non linéaires affectent suffisamment la transmission d'informations par cette liaison pour nécessiter une correction de ces effets. Une telle liaison est typiquement une liaison à très grande distance telle que les liaisons intercontinentales dont les longueurs vont de 3 000 à 10 000 km environ et éventuellement plus.

Des liaisons de longueurs plus petites peuvent cependant être concernées par la présente invention si leurs puissances optiques moyennes sont importantes. Plus précisément cette invention s'applique lorsque l'intégrale de la puissance sur la longueur de la ligne : somme de P.dl, atteint des valeurs élevées faisant apparaître des effets non linéaires propres à créer des erreurs de transmission gênantes.

Un système établissant une telle liaison sera désigné plus brièvement ci-après par l'appellation "liaison".

Une telle liaison connue comporte des éléments qui sont communs à cette liaison et à une liaison selon la présente invention et qui comportent d'abord une ligne de transmission. Cette ligne est constituée d'une fibre optique de ligne présentant une dispersion linéique de nature chromatique de sens normal et inférieure à 1 et de préférence à 0,5 ps/nm.km de sorte que l'ensemble de cette ligne présente une dispersion de ligne qui déforme un signal transmis. Cette ligne est munie d'amplificateurs optiques répartis sur sa longueur de sorte qu'un signal optique guidé par cette fibre présente localement des amplitudes accrues faisant apparaître des effets non linéaires qui contribuent à déformer encore ce signal.

Ces éléments communs comportent encore des moyens de correction de signal optique pour recevoir le signal de sortie de ligne et pour le corriger de manière à obtenir un signal optique corrigé plus proche du signal d'entrée de ligne. Ces moyens de correction de signal comportent un filtre de sortie filtrant des fréquences optiques. Une largeur de bande passante de ce filtre constitue une largeur de bande de filtrage correctif.

Ces éléments communs comportent enfin des moyens d'exploitation de signal optique pour recevoir le signal corrigé et pour en extraire une information à transmettre qui était portée par le signal d'entrée. Cette information est inévitablement extraite avec un taux d'erreur. La largeur de bande de filtrage correctif est choisie pour minimiser ce taux d'erreur.

Dans une première liaison à très grande distance connue, la largeur de bande de filtrage correctif est très petite. Il s'agit en effet d'éliminer autant que possible les composantes spectrales ajoutées par les effets non linéaires. Cette largeur est par exemple de 20 GHz c'est-à-dire de 0,16 nm.

Cette première liaison à très grande distance connue est proposée dans le Journal of lightwave technology, vol 9 n°3 Mars 1991. (D. Marcuse).

Une deuxième liaison à très grande distance connue est décrite dans un article N.Henmi, et al."Dispersion compensation by prechirp technique in multigigabit optical amplifier repeater systems " (Topical Meeting on Optical Amplifiers and Their Applications" Août 1990).

Par ailleurs pour la réalisation d'une telle liaison, le brevet US -A 4 969 710 enseigne de réaliser une compensation de dispersion en associant en série deux fibres de compositions différentes ayant des dispersions de signes opposés. Il enseigne plus précisément de choisir le rapport des longueurs de ces deux fibres de manière à annuler la dispersion totale présentée par l'association de ces deux fibres.

La présente invention a notamment pour but de permettre de réaliser simplement une liaison de ce genre présentant un taux d'erreur diminué et/ou un débit de transmission augmenté.

Dans ces buts elle propose de disposer, en sortie de la ligne de transmission, un compensateur de dispersion pour appliquer une dispersion de compensation de nature chromatique présentant un sens opposé à celui de la dispersion de ligne mais une valeur absolue inférieure faisant apparaître un déficit de compensation non nul. Elle a également pour objet un procédé de traitement de signal optique tel que celui qui est appliqué dans cette liaison.

Selon la présente invention certaines des composantes spectrales ajoutées par les effets non linéaires ne sont pas éliminées par le filtre de sortie comme dans la première liaison à très grande distance connue précédemment mentionnée. Grâce au compensateur de dispersion elles sont au contraire utilisées pour constituer un signal corrigé de qualité améliorée.

On peut remarquer que l'utilisation d'un compensateur de dispersion constitué par une fibre optique en sortie d'une ligne de transmission a déjà été proposée par un article K.Hagimoto et al"A 17 Gb/s long-span fiber transmission experiment using a low noise broad-band receiver with optical amplification and equalization" (Topical Meeting on Optical Amplifiers and Their Applications" Août 1990.

Il s'agissait d'une liaison à distance modérée (150 km).

Dans une telle liaison à distance modérée les effets non linéaires sont négligeables et on utilise des fibres de ligne relativement peu coûteuses qui présentent des dispersions linéiques de ligne relativement élevées de l'ordre 1 ps/nm.km. Dans ces liaisons la distorsion du signal de sortie est donc une distorsion chromatique simple et il n'y a pratiquement pas de composantes spectrales ajoutées.

A l'aide des figures schématiques ci-jointes on va décrire plus particulièrement ci-après, à titre d'exemple non limitatif, comment la présente invention peut être mise en oeuvre.

La figure 1 représente une vue d'ensemble d'une liaison selon la présente invention.

La figure 2 représente un diagramme de variation d'un taux d'erreur de transmission en fonction d'un déficit de compensation relatif réalisé sur une telle liaison.

La figure 3 représente un diagramme de variation d'un déficit de compensation optimal en fonction d'une puissance moyenne.

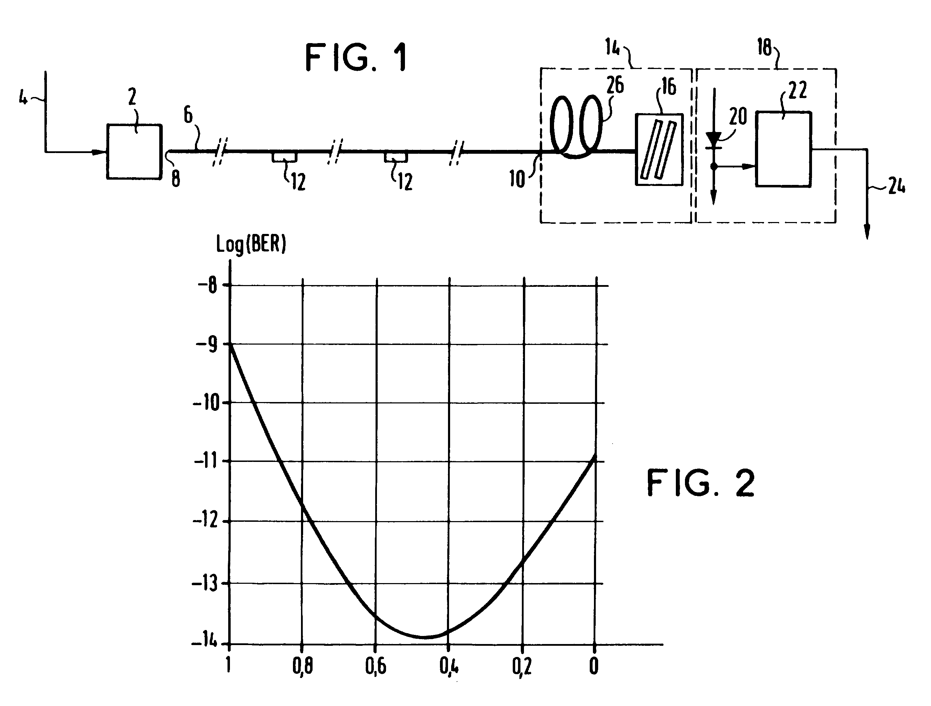

La liaison de la figure 1 comporte divers éléments qui, quant aux fonctions qui vont être indiquées, lui sont communs avec la première liaison à très grande distance précédemment mentionnée.

Ces éléments communs sont les suivants :
- Des moyens d'émission 2 recevant un signal d'entrée de liaison de nature électrique par un conducteur électrique 4, et formant en réponse un signal d'entrée de ligne de nature optique portant une information à transmettre.
- Une ligne de transmission 6 ayant une entrée 8 pour recevoir ce signal d'entrée de ligne et une sortie 10 pour fournir un signal de sortie de ligne résultant de la transmission de ce signal d'entrée. Cette ligne a par exemple une longueur supérieure à 3 000 km. Elle est constituée d'une fibre optique de ligne présentant une dispersion linéique de nature chromatique de sens normal et inférieure par exemple à 0,5 ps/nm.km de sorte que l'ensemble de cette ligne présente une dispersion de ligne. Elle est munie d'amplificateurs optiques 12 répartis sur sa longueur de sorte qu'un signal optique guidé par cette fibre présente localement des amplitudes accrues faisant apparaître des effets non linéaires. Ces effets élargissent le spectre de ce signal par des composantes spectrales ajoutées. Il en résulte que le signal de sortie de ligne présente, par rapport au signal d'entrée de ligne, non seulement une distorsion chromatique simple résultant de l'effet de la dispersion de ligne sur ce signal d'entrée mais surtout une distorsion composite résultant de l'effet de la dispersion de ligne sur ces composantes spectrales ajoutées.
- Des moyens de correction de signal optique 14 pour recevoir le signal de sortie de ligne et pour le traiter de manière à obtenir un signal optique corrigé plus proche du signal d'entrée de ligne. Ces moyens de correction de signal comportent un filtre de sortie 16 filtrant des fréquences optiques en présentant une largeur de bande passante qui constitue une largeur de bande de filtrage correctif.
- Des moyens d'exploitation de signal optique 18 pour recevoir ce signal corrigé et pour en extraire une information à transmettre qui était portée par le signal d'entrée. Cette information est extraite avec un taux d'erreur, ladite largeur de bande de filtrage correctif étant choisie pour minimiser ce taux d'erreur. Ces moyens d'exploitation de signal optique comportent un détecteur 20 fournissant un signal détecté de nature électrique à des circuits électroniques d'exploitation 22 qui fournissent un signal de sortie de liaison sur une ligne électrique 24. C'est ce signal de sortie de liaison qui restitue l'information à transmettre et c'est sur lui que l'on mesure le taux d'erreur de la liaison.

Conformément à la présente invention les moyens de correction de signal 14 comportent en outre un compensateur de dispersion 26 présentant une dispersion de compensation de même nature et de sens opposé à celui de la dispersion de ligne, la valeur absolue de cette dispersion de compensation étant inférieure à celle de cette dispersion de ligne, la différence de ces deux valeurs constituant un déficit de compensation qui est choisi voisin d'un déficit de compensation optimal minimisant ledit taux d'erreur.

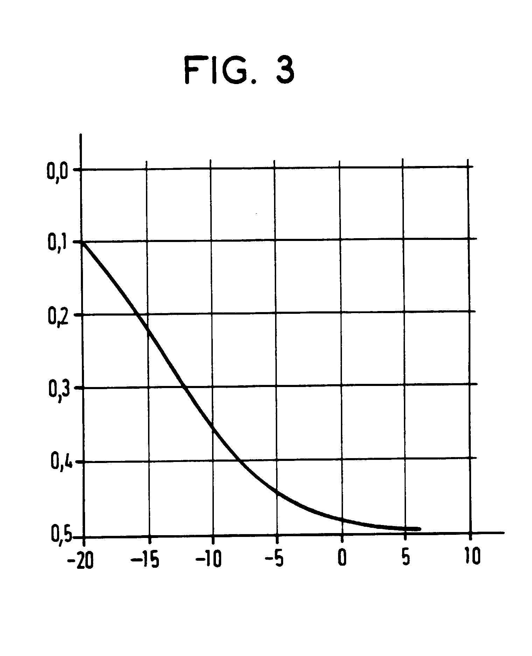

On peut définir un déficit de compensation relatif constitué par le déficit de compensation rapporté à la dispersion de transmission. Ce déficit de compensation relatif est supérieur à 5 % et de préférence compris entre 5 et 80 %, la valeur optimale de ce déficit étant fonction de la puissance moyenne sur la ligne, comme représenté à la figure 3.

De préférence encore la largeur de bande de filtrage correctif est comprise entre 0,2 et 0,9 nm et de préférence encore dans l'intervalle 0,25 - 0,6 nm.

De même que dans la liaison à distance moyenne connue précédemment mentionnée, et de préférence, le compensateur de dispersion est constitué par une fibre optique de compensation de dispersion présentant une dispersion linéïque de compensation supérieure, en valeurs absolues, à dix fois la dispersion linéïque de ligne.

On comprendra que la liaison qui vient d'être décrite applique au signal de sortie de ligne un procédé de traitement qui peut être appliqué avec avantage chaque fois qu'un signal optique porte une information à transmettre et a subi des effets non linéaires et une dispersion de ligne de nature chromatique. Selon ce procédé, pour recueillir cette information avec un taux d'erreur minimal, on applique à ce signal une dispersion de compensation de nature chromatique présentant un sens opposé à celui de cette dispersion de ligne et une valeur absolue inférieure.

Les diagrammes des figures 2 et 3 ont été obtenus par une simulation numérique. Le diagramme de la figure 2 représente en abscisses un déficit de compensation relatif pouvant être appliqué à la sortie d'une telle ligne. Il représente en ordonnées le logarithme du taux d'erreurs de transmission qui en résulte lorsque cette liaison comporte des amplificateurs distants de 50 km pour fournir une puissance de sortie de -2,5 dBm correspondant à une puissance moyenne de -6,6 dBm. Il fait apparaître un déficit de compensation relatif optimal rendant ce taux d'erreur minimal et voisin dans ce cas particulier de 0,45. Le diagramme de la figure 3 représente en abscisses la puissance moyenne sur une telle ligne et en ordonnées le déficit de compensation relatif optimal correspondant.

## Revendications

1. Système de communication pour établir une liaison de communication optique avec corrections d'effets non linéaires, ce système comportant une ligne de transmission (6) à fibre optique dans laquelle se produisent une dispersion de ligne de nature chromatique et des effets non linéaires, ce système comportant en outre des moyens de correction pour limiter les conséquences désavantageuses de cette dispersion de ligne et/ou de ces effets non linéaires, ce système étant caractérisé par le fait que ces moyens de correction (16,26) comportent, en sortie de la ligne de transmission, un compensateur de dispersion (26) pour appliquer une dispersion opposée en sens et inférieure en valeur absolue à cette dispersion de ligne.

2. Système selon la revendication 1, ce systéme comportant des moyens d'émission (2) pour former un signal d'entrée de ligne de nature optique portant une information à transmettre,
- ce système comportant aussi une ligne de transmission (6) ayant une entrée (8) pour recevoir ce signal d'entrée de ligne et une sortie (10) pour fournir un signal de sortie de ligne résultant de la transmission de ce signal d'entrée, cette ligne ayant une longueur supérieure à 3 000 km et étant constituée d'une fibre optique de ligne présentant une dispersion linéique de nature chromatique ayant un sens normal et une grandeur inférieure à 1 ps/nm.km de sorte que l'ensemble de cette ligne présente une dispersion de ligne,
cette ligne étant munie d'amplificateurs optiques (12) répartis sur sa longueur de sorte qu'un signal optique guidé par cette fibre présente localement des amplitudes accrues faisant apparaître des effets non linéaires qui élargissent le spectre de ce signal par des composantes spectrales ajoutées, et que le signal de sortie de ligne présente, par rapport au signal d'entrée de ligne, non seulement une distorsion chromatique simple résultant de l'effet dela dispersion de ligne sur ce signal d'entrée mais surtout une distorsion composite résultant de l'effet de la dispersion de ligne sur ces composantes spectrales ajoutées,
- ce système comportant encore des moyens de correction de signal optique (14) pour recevoir le signal de sortie de ligne et pour le traiter de manière à obtenir un signal optique corrigé plus proche du signal d'entrée de ligne,
- ces moyens de correction de signal comportant un filtre de sortie (16) filtrant des fréquences optiques en présentant une largeur de bande passante qui constitue une largeur de bande de filtrage correctif,
- ce système comportant enfin des moyens d'exploitation de signal optique (18) pour recevoir ce signal corrigé et pour en extraire une information à transmettre qui était portée par le signal d'entrée, cette information étant extraite avec un taux d'erreur, ladite largeur de bande de filtrage correctif étant choisie pour minimiser ce taux d'erreur,
ce système étant caractérisé par le fait que lesdits moyens de correction de signal (14) comportent en outre un compensateur de dispersion (26) présentant une dispersion de compensation de même nature et de sens opposé à celui de la dispersion de ligne, la valeur absolue de cette dispersion de compensation étant inférieure à celle de cette dispersion de ligne, la différence de ces deux valeurs constituant un déficit de compensation qui est choisi voisin d'un déficit de compensation optimal minimisant ledit taux d'erreur.

3. Système selon la revendication 1 caractérisé par le fait qu'un déficit de compensation relatif est supérieur à 5 %, ce déficit de compensation relatif étant constitué par ledit déficit de compensation rapporté à ladite dispersion de ligne.

4. Système selon la revendication 3 caractérisé par le fait que ledit déficit de compensation relatif est compris entre 5 et 80 %.

5. Système selon la revendication 2 caractérisé par le fait que ladite largeur de bande de filtrage correctif est supérieure à 0,2 nm.

6. Système selon la revendication 5 caractérisé par le fait que ladite largeur de bande de filtrage correctif est comprise entre 0,2 et 0,9 nm.

7. Système selon la revendication 6 caractérisé par le fait que ladite largeur de bande de filtrage correctif est comprise dans l'intervalle 0,25 - 0,6 nm.

8. Procédé de traitement d'un signal optique de sortie qui porte une information à transmettre et qui a subi des effets non linéaires et une dispersion de ligne de nature chromatique, ce procédé étant caractérisé par le fait qu'on applique à ce signal une dispersion de compensation de signe opposé à celui de cette dispersion de ligne tout en laissant subsister, en ce qui concerne la dispersion chromatique affectant ce signal, un déficit de compensation non nul.

9. Procédé selon la revendication 8 caractérisé par le fait que ledit déficit de compensation est compris entre 5 et 80 % de la dispersion de ligne.

## Patentansprüche

1. Kommunikationssystem zum Herstellen einer optischen Kommunikationsverbindung mit Korrektur nichtlinearer Effekte, umfassend eine Übertragungsleitung (6) mit optischer Faser, in der eine Leitungsdispersion chromatischer Natur und nichtlineare Effekte auftreten, wobei das System ferner Korrekturmittel zum Begrenzen der nachteiligen Konsequenzen dieser Leitungsdispersion und/oder dieser nichtlinearen Effekte umfaßt, dadurch gekennzeichnet, daß die Korrekturmittel (16, 26) am Ausgang der Übertragungsleitung einen Dispersionskompensator (26) zum Ausüben einer Dispersion in entgegengesetzter Richtung und mit kleinerem Absolutwert als dem der Leitungsdispersion umfassen.

2. System nach Anspruch 1, wobei das System Sendemittel (2) umfaßt zum Bilden eines Leitungseingangssignals optischer Natur, das eine zu übertragende Information trägt,
- wobei das System auch eine Übertragungsleitung (6) mit einem Eingang (8) zum Empfangen dieses Leitungseingangssignals und einen Ausgang (10) zum Liefern eines aus der Übertragung dieses Eingangssignals resultierenden Leitungsausgangssignals hat, wobei die Leitung eine Länge von über 3.000 km hat und aus einer optischen Leitungsfaser gebildet ist, die eine längenbezogene Dispersion chromatischer Natur mit normaler Richtung und einer Größe von weniger als 1 ps/nm.km aufweist, so daß die Gesamtheit der Leitung eine Leitungsdispersion aufweist,
wobei diese Leitung mit optischen Verstärkern (12) ausgestattet ist, die über ihre Länge verteilt sind, so daß ein von dieser Faser geleitetes optisches Signal lokal erhöhte Amplituden aufweist, die nichtlineare Effekte auftreten lassen, die das Spektrum dieses Signals durch hinzugefügte Spektralkomponenten verbreitern, und bewirken, daß das Leitungsausgangssignal im Verhältnis zum Leitungseingangssignal nicht nur eine einfache, aus dem Effekt der Leitungsdispersion auf dieses Eingangssignal resultierende chromatische Dispersion, sondern insbesondere eine zusammengesetzte, aus dem Effekt der Leitungsdispersion auf die hinzugefügten Spektralkomponenten resultierende zusammengesetzte Dispersion aufweist,
- wobei das System ferner Korrekturmittel (14) für das optische Signal umfaßt, zum Empfangen des Leitungsausgangssignals und zum Bearbeiten desselben, um ein korrigiertes optisches Signal zu erhalten, das dem Leitungseingangssignal näher ist,
- wobei diese Signalkorrekturmittel ein Ausgangsfilter (16) umfassen, das optische Frequenzen filtert und eine Durchgangsbandbreite aufweist, die eine Korrekturfilterungsbandbreite darstellt,
- wobei das System schließlich Verwertungsmittel (18) für das optische Signal umfaßt, zum Empfangen des korrigierten Signals und zum Gewinnen einer zu übertragenden Information daraus, die vom Eingangssignal getragen war, wobei diese Information mit einer Fehlerquote gewonnen wird, und die Korrekturfilterungsbandbreite gewählt ist, um diese Fehlerquote zu minimieren,
dadurch gekennzeichnet, daß die Signalkorrekturmittel (14) ferner einen Dispersionkompensator (26) umfassen, der eine Kompensationsdispersion gleicher Natur und entgegengesetzter Richtung zu der der Leitungsdispersion aufweist, wobei der Absolutwert dieser Kompensationsdispersion kleiner als der dieser Leitungsdispersion ist und die Differenz dieser zwei Werte ein Kompensationsdefizit darstellt, das in der Nähe eines optimalen, die Fehlerquote minimierenden Kompensationsdefizits gewählt ist.

3. System nach Anspruch 1, dadurch gekennzeichnet, daß ein relatives Kompensationsdefizit größer als 5% ist, wobei das relative Kompensationsdefizit gebildet ist durch das Kompensationsdefizit bezogen auf die Leitungsdispersion.

4. System nach Anspruch 1, dadurch gekennzeichnet, daß das relative Kompensationsdefizit zwischen 5 und 80% liegt.

5. System nach Anspruch 2, dadurch gekennzeichnet, daß die Korrekturfilterungsbandbreite größer als 0,2 nm ist.

6. System nach Anspruch 5, dadurch gekennzeichnet, daß die Korrekturfilterungsbandbreite zwischen 0,2 und 0,9 nm liegt.

7. System nach Anspruch 6, dadurch gekennzeichnet, daß die Korrekturfilterungsbandbreite im Intervall 0,25 - 0,6 nm liegt.

8. Verfahren zur Verarbeitung eines optischen Ausgangssignals, das eine zu übertragende Information trägt und das nichtlineare Effekte und eine Leitungsdispersion chromatischer Natur erfahren hat, dadurch gekennzeichnet, daß auf das Signal eine Kompensationsdispersion mit zu dem der Leitungsdispersion entgegengesetztem Vorzeichen ausgeübt wird, wobei hinsichtlich der das Signal beinflussenden chromatischen Dispersion ein nicht verschwindendes Kompensationsdefizit belassen wird.

9. Verfahren nach Anspruch 8, dadurch gekennzeichnet, daß das Kompensationsdefizit zwischen 5 und 80% der Leitungsdispersion beträgt.

## Claims

1. Optical communication system for establishing an optical communication link with correction of non-linear effects, said system comprising an optical fibre transmission line (6) subject to chromatic dispersion and non-linear effects, said system further comprising correction means for limiting the disadvantageous consequences of said line dispersion and/or said non-linear effects, said system being characterised in that said correction means (16, 26) comprise at the output of the transmission line a dispersion compensator (26) for applying dispersion in the opposite direction to and of lower absolute value than said line dispersion.

2. System according to claim 1 comprising send means (2) for forming a line input optical signal conveying information to be transmitted,
- said system comprising also a transmission line (6) having an input (8) for receiving said line input signal and an output (10) for supplying a line output signal resulting from the transmission of said input signal, said line having a length exceeding 3 000 km and comprising an optical fibre having a normal direction chromatic dispersion of less than 1 ps/nm.km so that said line as a whole has a line dispersion,
said line being provided with optical amplifiers (12) distributed over its length so that an optical signal guided by said fibre has locally increased amplitudes causing non-linear effects which broaden the spectrum of the signal by adding spectral components, said line output signal, as compared with the line input signal, being affected not only by simple chromatic distortion resulting from the effect on the input signal of the line dispersion but also and more importantly by composite distortion resulting from the effect of the line dispersion on the additional spectral components,
- said system further comprising optical signal correction means (14) for receiving the line output signal and processing it to obtain a corrected optical signal closer to the line input signal,
- said signal correction means comprising an output filter (16) adapted to filter optical frequencies and having a bandwidth which constitutes a corrective filtering bandwidth,
- said system finally comprising optical signal processing means (18) for receiving said corrected signal and extracting from it the information to be transmitted which was conveyed by the input signal, said information being affected by errors, said corrective filtering bandwidth being chosen to minimise the error rate,
said system being characterised in that said signal correction means (14) further comprise a dispersion compensator (26) having a dispersion of the same nature but the opposite direction to said line dispersion, the absolute value of said compensating dispersion being less than that of said line dispersion, the difference between said two values constituting a compensation deficit which is chosen to be close to an optimum compensation deficit minimising said error rate.

3. System according to claim 1 characterised in that a relative compensation deficit consisting of the ratio of said compensation deficit to said line dispersion has a value exceeding 5%.

4. System according to claim 3 characterised in that said relative compensation deficit has a value between 5 and 80%.

5. System according to claim 2 characterised in that said corrective filtering bandwidth is greater than 0.2 nm.

6. System according to claim 5 characterised in that said corrective filtering bandwidth is between 0.2 and 0.9 nm.

7. System according to claim 6 characterised in that said corrective filtering bandwidth is in the range 0.25 - 0.6 nm.

8. Method of processing an optical output signal which conveys information to be transmitted and which is subject to non-linear effects and line chromatic dispersion, said method being characterised in that there is applied to said signal compensating dispersion of opposite sign to said line dispersion in such a way as to leave a non-null compensation deficit.

9. Method according to claim 8 characterised in that said compensation deficit is between 5 and 80% of the line dispersion.
